# EUROPÄISCHE PATENTSCHRIFT

(11) **EP 0 820 857 B1**
(45) Veröffentlichungstag und Bekanntmachung des Hinweises auf die Patenterteilung: **30.10.2002**
(21) Anmeldenummer: 97112784.0
(22) Anmeldetag: 25.07.1997
(51) Int. Cl.: B29D 30/44, B29C 35/08, B29C 35/16

(54) **Verfahren zur Herstellung einer Karkasse eines Reifens und Vorrichtung zur Verwendung in dem Verfahren**
Method and apparatus for manufacturing a tyre carcass
Procédé et dispositif de fabrication d'une carcasse de pneu

(30) Priorität: 27.07.1996 DE 19630452
(43) Veröffentlichungstag der Anmeldung: 28.01.1998
(73) Patentinhaber: Continental Aktiengesellschaft, 30165 Hannover (DE)
(72) Erfinder: Hesse, Heiko, 30900 Wedemark (DE)

(56) Entgegenhaltungen:
- EP-A- 0 406 821
- EP-A- 0 407 134
- PATENT ABSTRACTS OF JAPAN vol. 095, no. 006, 31. Juli 1995 & JP 07 080963 A (BRIDGESTONE CORP), 28. März 1995
- PATENT ABSTRACTS OF JAPAN vol. 018, no. 192 (M-1587), 4. April 1994 & JP 06 000896 A (TOYO TIRE & RUBBER CO LTD), 11. Januar 1994

## Beschreibung

Die Erfindung betrifft ein Verfahren zur Herstellung einer aus mehreren Lagen aufgebauten Karkasse eines Reifens, insbesondere eines Fahrzeugreifens, durch Wickeln der Lagen um eine Trommel mit folgenden Schritten:
a) Ausbilden der Innenseele aus einer luftdichten Gummischicht;
b) Auflegen der Einlage auf die Innenseele, wobei das Einlagenmaterial aus in Gummimaterial eingebetteten Einlagefäden aus Kunststoff besteht, die vor dem Einbetten unter Temperatureinfluß vorgereckt wurden, und sich der Anfang und das Ende der aufgelegten Einlage überlappen;
c) Setzen der Wulstkerne;
d) Umschlagen der seitlichen Ränder der Einlage um die Wulstkerne und
e) Auflegen von Seitenstreifen oder ähnlichem und Umschlagen um die Wulstkerne.

Auf eine so hergestellte Karkasse werden anschließend der Gürtel und die Lauffläche des Reifens ebenfalls durch Wickeln auf einer Trommel aufgebracht, bevor der Reifen-Rohling dann vulkanisiert wird.

Die einzelnen Lagen sind jeweils Bahnen, die in eine solche Länge geschnitten wurden, daß sie in jeweils einer Schicht um den Reifen gelegt werden können, wobei das Ende jeder Bahn in aller Regel ihren Anfang anschließend überlappt, um sicherzustellen, daß ein über den Umfang auch wirklich geschlossener Streifen hergestellt wird. Die Einlage besteht aus einer Gummischicht, in die in Richtung der Breite (Querrichtung) als Festigkeitsträger Fäden eingebracht sind. Diese Fäden können beispielsweise aus Rayon, Polyester oder einem anderen Kunststoff bestehen. Gegenüber Rayonfäden haben Polyesterfäden den Vorteil, daß sie preiswerter sind. Nachteilig an ihnen ist aber, daß sie eine höhere Dehnfähigkeit besitzen. Wenn die gewickelte Karkasse in Form gebracht wird, wirken auf die in der Einlage befindlichen Fäden Zugkräfte. Ebenso treten beim Vulkanisieren des Reifens Zugkräfte in den Fäden auf, so daß sie sich dehnen. Um eine gleichmäßige definierte Dehnung der Fäden zu gewährleisten werden diese bevor sie dem Kalander zugeführt werden, um in Gummimaterial eingebettet zu werden unter Temperatureinfluß vorgereckt. Die Längung der vorgereckten Fäden ist durch Wärmezufuhr rückführbar. Bei Erhitzung des Einlagenmaterials kommt es deshalb zu einer Schrumpfung der Einlage. Beim Vulkanisieren während des Heizens von Rohlingen in der Heizpresse haben die Einlagefäden folglich das Bestreben, sich zusammenzuziehen, was durch den Balgdruck verhindert wird. Nach der Vulkanisation (bei fehlendem Balgdruck) entsteht ein erhöhter Spannungszustand in den Einlagefäden, der im ausvulkanisierten Gummi eingefroren (fixiert) wird.

Bedingt durch das zuvor beschriebene Aufbauverfahren besitzt die Einlagenschicht an der Nahtstelle eine Überlappung von etwa 2 bis 6 mm. Hier besitzt die Einlage also die doppelte Materialstärke, die doppelte Dichte an Fäden, also Festigkeitsträgern, und dadurch einen veränderten E-Modul. An dieser Stelle der Einlage findet folglich bei gleicher Zugkraftbeaufschlagung eine geringere Dehnung des Einlagenmaterials statt. Das führt dazu, daß später beim fertigen Reifen im aufgepumpten Zustand die Nahtstelle der Einlage als Einschnürung im Seitenwandbereich sichtbar ist. Die Qualität und Festigkeit des Reifens wird dadurch zwar nicht beeinträchtigt, es handelt sich jedoch um einen Schönheitsfehler, der gerade vom Laien häufig als Riß der Karkasse gedeutet und beim Reifen- oder Fahrzeughersteller reklamiert wird.

Von dieser Problemstellung ausgehend soll das Verfahren so fortgebildet werden, daß eine Einschnürung des Reifens im Seitenwandbereich sicher vermieden wird.

Zur Problemlösung wird das Einlagenmaterial im Anfangs- und Endbereich im Bereich der späteren Überlappung erwärmt, um die Längung der vorgereckten Fäden im Überlappungsbereich zurückzuführen.

Mit diesem Verfahrensschritt wird sich zunutze gemacht, daß die Längung der vorgereckten Fäden durch Wärmezufuhr rückführbar ist. Das Einlagenmaterial wird also im Bereich seiner Nahtstelle schrumpfen und eine höhere Dehnfähigkeit aufweisen. Im aufgepumpten Reifen können sich folglich die Fäden der Einlage im Überlappungsbereich stärker dehnen, so daß an dieser Stelle im Seitenwandbereich keine Einschnürung mehr auftreten kann. Die Temperatur und Erwärmdauer ist abhängig von der Art der Kunststoffäden in ihrer Zusammensetzung und Dimension. Diese Parameter sind daher iterativ zu bestimmen.

Das Erwärmen des Einlagenmaterials kann auf der Trommel erfolgen oder vorzugsweise vor dem Auflegen der Einlage, so daß der Bereich der späteren Überlappung erwärmt wird. Die Erwärmung kann über Teilbereiche der Breite des Materials oder über die volle Materialbreite erfolgen.

Vorteilhaft ist es, wenn das Einlagenmaterial über die ersten und letzten zwei bis sechs, insbesondere vier Fäden erwärmt wird. Damit erfolgt die Zurückführung der gelängten Fäden über einen ausreichend langen (bezogen auf die Umfangsrichtung) Bereich, um eine sichere Überlappung des Einlagenmaterials zu erhalten.

Wenn bei dem Verfahren die einzelnen Lagen in endlosen Bahnen der Trommel über eine Zuführeinrichtung zugeführt und unmittelbar vor dem Wickeln um die Trommel auf die passende Länge geschnitten werden, ist es insbesondere vorteilhaft, wenn das Einlagenmaterial vor dem Schneiden unmittelbar an der Schnittstelle so erwärmt wird, daß beidseitig der Schnittstelle dieselbe Anzahl Fäden erwärmt wird. Damit wird dann jeweils der Endbereich der aktuell zu verarbeitenden Lagenbahn und der Anfangsbereich der nächsten zu verarbeitenden Lagenbahn thermisch behandelt. Gleichzeitig ist sichergestellt, daß der Anfangsbereich und der Endbereich über dieselbe Länge behandelt sind, so daß die Nahtüberlappung anschließend vollständig durch verkürzte Fäden mit höherer Dehnfähigkeit besteht.

Vorzugsweise wird das Einlagenmaterial nach dem Erwärmen wieder abgekühlt um später ein Aufspreizen der Einlage beim Umschlagen der seitlichen Ränder vor ihrer Verarbeitung zu vermeiden. Insbesondere ist es vorteilhaft, wenn das Abkühlen vor dem Schneiden erfolgt. Zur Kühlung kann gekühlte Druckluft verwendet werden.

Während des Heizprozesses beim Vulkanisieren kommt es durch die vorherhige Ausführung des erfindungsgemäßen Verfahrens zu folgendem Effekt:

Alle Einlagefäden, die sich nicht in der Nahtüberlappung befinden, haben aufgrund der hohen Heiztemperatur das Bestreben sich zusammenzuziehen. Es entsteht ein erhöhter Spannungszustand in diesen Fäden. Die bereits geschrumpften Fäden in der Nahtüberlappung hingegen befinden sich in einem entspannten Zustand. Nach der Vulkanisation (bei fehlendem Balgdruck) entsteht in den vorbehandelten, entspannten Fäden ein geringerer Spannungszustand als in den restlichen Fäden. Dieser geringere Spannungszustand wird durch das vulkanisierte Gummi ebenso eingefroren (fixiert) wie der erhöhte Spannungszustand in den restlichen Fäden. Wie bereits erläutert bewirkt dieser Effekt, daß sich die Fäden der Nahtüberlappung im aufgepumpten Reifen stärker dehnen können als die restlichen Fäden. Dadurch wird also eine Einschnürung im Seitenwandbereich vermieden. Da in der Naht aber auch die doppelte Dichte an Fäden vorliegt, wird selbstverständlich eine Beule an dieser Stelle des Reifens wirksam verhindert.

Eine Vorrichtung zur Erwärmung des Einlagenmaterials zur Verwendung in dem Verfahren, bei dem die Zuführeinrichtung mit einer wenigstens ein Schneidmesser aufweisenden Schneideinrichtung versehen ist, ist erfindungsgemäß dadurch gekennzeichnet, daß unterhalb der Schneideinrichtung mindestens ein zumindest über Teilbereiche der Bahnbreite des Einlagenmaterials reichender, an das Einlagenmaterial heranbringbarer Wärmestrahler so angeordnet ist, daß beidseitig zum Schneidmesser ein eindeutig begrenzter und identischen Längenbereich des Einlagenmaterials erwärmt wird. Vorteilhaft ist es, wenn ein einziger Wärmestrahler so angeordnet ist, daß er über die volle Bahnbreite des Einlagenmaterials reicht.

Damit kann das Verfahren in den automatisierten Fertigungsablauf integriert werden. Es ist dann sichergestellt, daß der Trennschnitt der Materialbahn auch tatsächlich an der Stelle erfolgt, an der diese erwärmt wurde.

Vorteilhafterweise ist der Wärmestrahler ein Infrarot-Strahler und zwischen dem Strahler und dem Einlagenmaterial ist ein geschlitztes Blech angeordnet, wobei die Länge des Schlitzes mindestens der Bahnbreite des Einlagenmaterials und seine Breite der Länge des zu erwärmenden Bereichs entspricht.

Ein Infrarot-Strahler bietet den Vorteil, daß seine Strahlung von glatten hellen Oberflächen reflektiert wird. Die Infrarotstrahlen werden folglich an dem zwischen dem Strahler und der Materialbahn angeordneten Blech reflektiert, während sie im Bereich des Schlitzes auf die Materialbahn auftreffen. Da die reflektierten Infrarotstrahlen das Blech nicht erhitzen können, bleibt dieses kalt, während sich die Materialbahn im Bereich des Schlitzes erwärmt. Das Blech dient deshalb als Schablone für das Erwärmen, so daß ein exakt definierter Längenbereich wärmebehandelt wird.

Um die Abkühlung der erwärmten Materialbahn zu erreichen ist eine zumindest über Teilbereiche der Breite reichende Kühlvorrichtung vorgesehen, die parallel beabstandete, auf die Materialbahn gerichtete Luftdüsen aufweist und mit Kaltluft betreibbar ist. Diese Vorrichtung wird vorzugsweise aktiviert, bevor die Materialbahn geschnitten wird. Wenn der Wärmestrahler über die volle Breite des Einlagenmaterials reicht, ist es vorteilhaft, wenn auch die Kühlvorrichtung entsprechend ausgestaltet ist.

Anhand einer Zeichnung soll die Erfindung nachfolgend näher erläutert werden. Es zeigt:

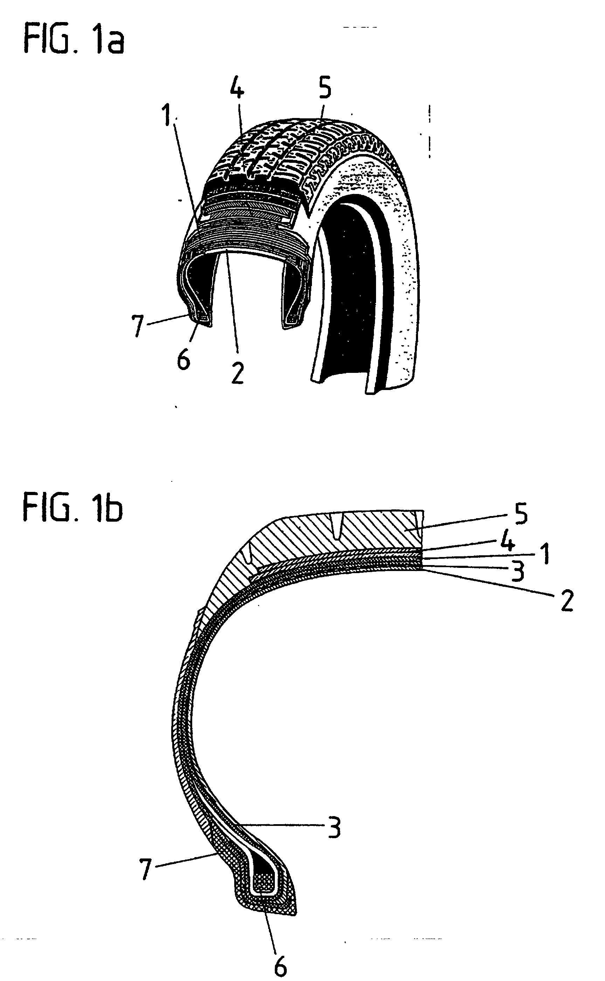

- Figuren 1a und 1b -: den Aufbau eines PKW-Reifens;
- Figuren 2a bis 2c -: die schematische Draufsicht auf die erfindungsgemäße Vorrichtung in jeweils anderer Funktionsposition;
- Figuren 3a bis 3c -: die schematische Darstellung des Erwärmens der Einlage.

Der mehrlagig aufgebaute Reifen besteht im wesentlichen aus der Karkasse 1, die aus der luftdichten Innenseele 2 der darüber angeordneten Einlage 3, dem Wulstkern 6, den Seitenstreifen 7 sowie den auf die Karkasse aufgebrachten Gürtel 4 und den Laufstreifen 5.

Vor dem Vulkanisieren wird der Rohling durch Wickeln bzw. Auflegen dieser einzelnen Lagen um bzw. auf einer nicht dargestellten Trommel hergestellt. Zunächst wird die Innenseele 2, die aus einer luftdichten Gummischicht besteht, aufgelegt. Die einzelnen Lagen liegen bahnförmig mit einer Länge vor, die im wesentlichen dem Trommelumfang entspricht. Die Trommel wird gedreht, bis das Ende der die Innenseele bildenden Bahn mit dem Anfang zusammentrifft, wobei im Nahtbereich eine geringfügige Überlappung hergestellt wird. Anschließend wird auf die Innenseele 2 die Einlage 3 aufgelegt. Die Einlage 3 ist ebenfalls eine streifenförmige Gummibahn, in die hintereinander eine Vielzahl (etwa 1000 Stück) Polyesterfäden 8 durch Kalandern eingebracht wurde. Die Fäden 8 verlaufen in Querrichtung des Einlagenmaterials.

Diese Polyesterfäden wurden vor dem Kalandern unter thermischer Beeinflussung vorgereckt. Durch erneutes Drehen der Trommel wird die Einlage vollständig auf der Trommel aufgelegt, wobei sich Anfang und Ende an der Naht etwa 1 bis 6 mm überlappen. Die Trommel wird nun in Richtung einer vorzugsweise über die volle Trommelbreite reichende Heizvorrichtung gedreht, bis der Überlappungsbereich der Heizvorrichtung gegenüberliegt. Die nicht gezeigte Heizvorrichtung wird eingeschaltet und der Überlappungsbereich kurzzeitig so erwärmt, daß sich die zunächst vorgereckten Fäden 8 durch den Wärmeeinfluß wieder verkürzen. Die Fäden 8 im Überlappungsbereich (Nahtstelle) werden dadurch gegenüber den übrigen Polyesterfäden verkürzt und besitzen dann eine höhere Dehnfähigkeit. Anschließend werden seitlich die Wulstkerne 6 gesetzt. Kernanlegeringe fahren anschließend seitlich zu und schlagen die beiden äußeren Ränder der Innenseele 2 und Einlage 3 um die Kerne 6 herum. Daran anschließen werden die Seitenstreifen 7 und gegebenenfalls eine weitere Verstärkungslage 9 aufgelegt und von außen um die Wulstkerne 6 herumgerollt. Die Karkasse 1 ist fertiggestellt, die Trommel wird im Durchmesser reduziert, so daß die Karkasse 1 von ihr abgenommen werden kann.

Vorzugsweise erfolgt die Erwärmung des Nahtbereichs nicht wie zuvor beschrieben auf der Trommel, sondern vorher, wie nachfolgend erläutert wird.

Bevor die Einlage 3 auf die Trommel gelegt wird, wird sie an ihren beiden Querseiten über eine der späteren Überlappung entsprechenden Länge mittels eines Heizbalkens 12 für etwa 6 bis 8 Sekunden auf ca. 170 °C erhitzt. Hierzu wird die konfektionierte Einlage 3 über den Heizbalken 14 geführt. Der erwärmte Bereich schrumpft, da sich die zunächst vorgereckten Fäden 8 durch den Wärmeeinfluß wieder verkürzen. Wenn die Einlage 3 an ihrem vorderen und hinteren Ende über einen Bereich von 4 Fäden 8 erwärmt wurde, liegen an der Nahtstelle acht Fäden 8 vor, die gegenüber den übrigen Polyesterfäden verkürzt sind und eine höhere Dehnfähigkeit besitzen.

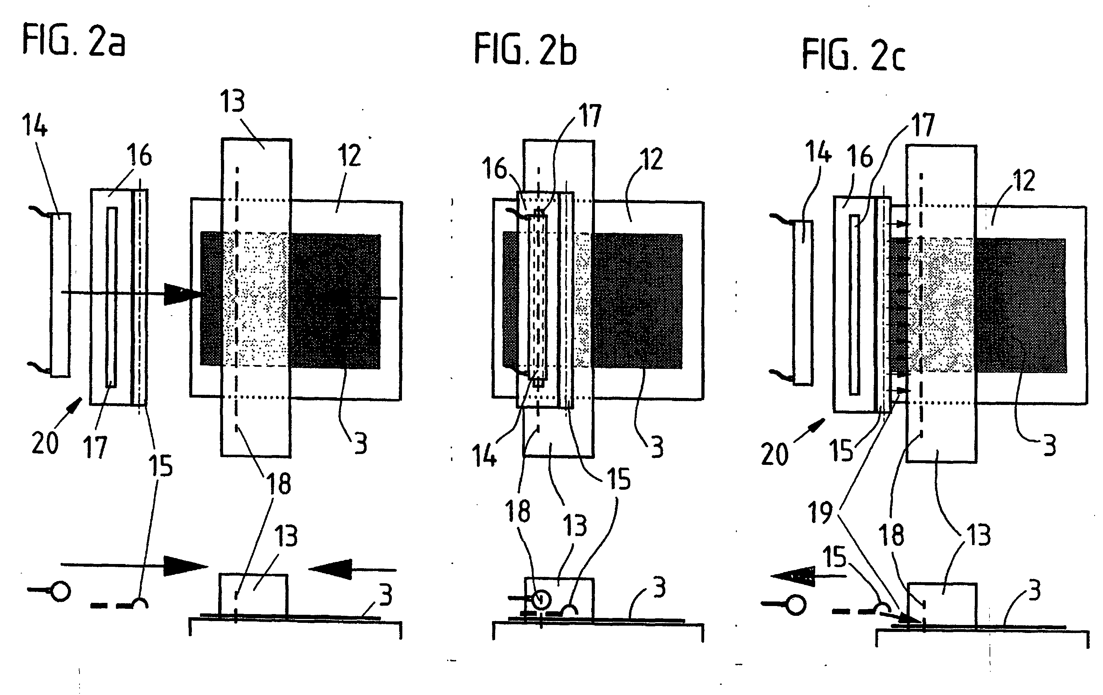

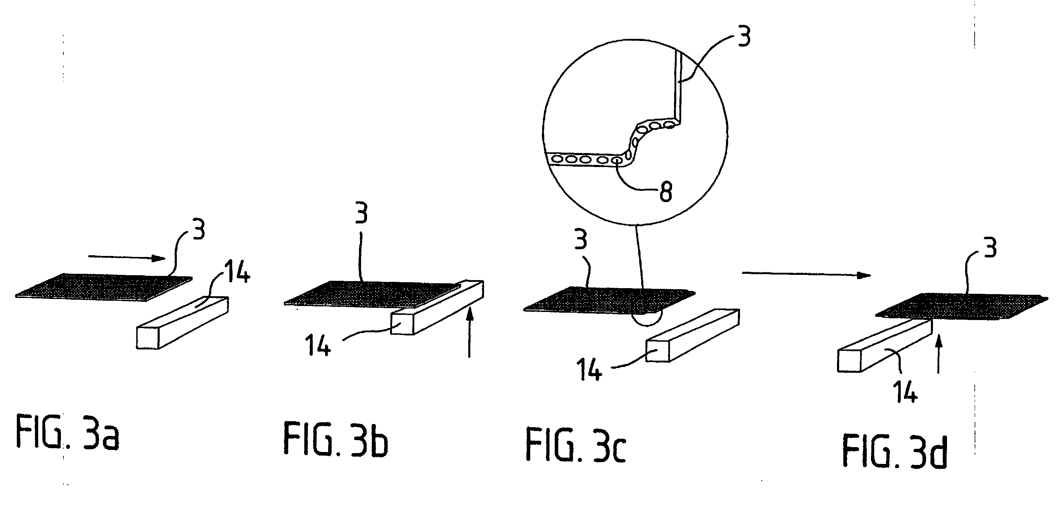

Figuren 2 und 3 ist der Verfahrensablauf des Erwärmens des Einlagenmaterials im Zusammenwirken mit einer automatischen Zuführvorrichtung 12 gezeigt, die auch HM-Servicer genannt wird und aus mehreren in unterschiedlichen Ebenen und Richtungen verlaufenden Förderbändern besteht, so daß die einzelnen "Gewebe"-Bänder jeweils positioniert der Trommel zugeführt werden. Vor der Trommel ist oberhalb der Zuführvorrichtung 12 eine Schneidvorrichtung 13 angeordnet, die zwei hier nicht näher dargestellt Hakenmesser umfaßt. Diese Hakenmesser werden auf die positionierte Materialbahn so aufgesetzt, daß sie zunächst exakt in der Mitte der zu schneidenden Bahn aufsetzen und dann nach außen auseinanderfahrend die Bahn durchtrennen. Hierzu ist es bekannt, daß die Bahn dabei festgeklemmt wird, um einen Verzug beim Schneiden und damit einen schiefen Schnittverlauf zu vermeiden. In Figur 2a ist die Heizvorrichtung 20 in ihrer Grundposition dargestellt. Die Einlage 3 wird in ihre Schneidposition vorgefördert. Der Schneidbereich der Schneidvorrichtung 13 ist mit 18 bezeichnet. Wenn sich die Einlage 3 in Schneidposition befindet, fährt zunächst das als Schablone dienende Blech 16 vor, das mit einem ca. 6 bis 8 mm breiten Schlitz 17 versehen ist. Die Breite des Schlitzes 17 entspricht der Länge des Nahtüberlappungsbereichs der Einlage 3. Die Länge des Schlitzes 17 entspricht mindestens der Breite der Einlage 3. Das Blech 16 fährt so weit vor, daß der Schlitz 17 unmittelbar über der durch den Trennbereich 18 vorgegebenen späteren Schnittlinie zu liegen kommt. Das Blech 16 wird dann auf das Einlagenmaterial abgesenkt. Anschließend fährt der Infrarot-Strahler 14 vor und erwärmt durch den Schlitz 17 die Einlage 3. Die seitlich des Schlitzes 17 auf das Blech 16 auftreffende Infrarotstrahlung wird von diesem reflektiert, so daß keine Erwärmung des Bleches 16 stattfindet. Die Einlage 3 wird folglich exakt in dem Bereich erwärmt, der durch den Schlitz 17 freigegeben ist. Nach Beendigung der optimalen, zuvor durch Iteration gefundenen Erwärmdauer wird der Infrarotstrahler 14 in seinen hinteren Bereich zurück gefahren. Der vorerhitzte Bereich wird über eine mit Luftdüsen 19 versehene Kühlluftvorrichtung 15 auf Raumtemperatur zurückgekühlt. Anschließend werden das Blech 16 und die Kühlvorrichtung 15 ebenfalls aus dem Trennbereich 16 des Messers zurückgefahren und die Lage 3 getrennt, wodurch mit einem Schnitt das hintere Ende der jetzt zur Verarbeitung anstehenden Stück aus der Einlagenbahn und das vordere Ende des als nächsten zur Verarbeitung anstehenden Stück Einlagenbahn erwärmt.

### Bezugszeichenliste

- 1: Karkasse
- 2: Innenseele
- 3: Einlage
- 4: Gürtel
- 5: Laufstreifen
- 6: Wulstkern
- 7: Seitenstreifen
- 8: Faden
- 9: Verstärkungslage
- 12: Zuführvorrichtung
- 13: Schneidvorrichtung
- 14: Infrarot-Strahler
- 15: Kühlvorrichtung
- 16: Blech
- 17: Schlitz
- 18: Trennbereich des Schneidmessers
- 19: Luftdüsen
- 20: Heizvorrichtung

## Patentansprüche

1. Verfahren zur Herstellung einer aus mehreren Lagen aufgebauten Karkasse (1) eines Reifens, insbesondere eines Fahrzeugreifens, durch Wickeln der Lagen um eine Trommel (10), mit folgenden Schritten:
a) Ausbilden der Innenseele (2) aus einer luftdichten Gummischicht,
b) Auflegen der Einlage (3) auf die Innenseele (2), wobei das Einlagenmaterial aus vorgereckten, in Gummi eingebetteten Einlagefäden aus Kunststoff besteht, die vor dem Einbetten unter Temperatureinfluß vorgereckt wurden, und sich der Anfang und das Ende der aufgelegten Einlage (3) überlappen,
c) Setzen der Wulstkerne (6),
d) Umschlagen der seitlichen Ränder der Einlage (3) um die Wulstkerne (6) und
e) Auflegen von Seitenstreifen (7) oder ähnlichem und Umschlagen um die Wulstkerne (6),
**dadurch gekennzeichnet, daß** das Einlagenmaterial im Anfangs-und Endbereich im Bereich der Überlappung erwärmt wird, um die Längung der vorgereckten Fäden (8) im Überlappungsbereich zurückzuführen.

2. Verfahren nach Anspruch 1, **dadurch gekennzeichnet, daß** das Erwärmen des Einlagenmaterials vor dem Auflegen der Einlage (13) im Bereich der späteren Überlappung erfolgt.

3. Verfahren nach Anspruch 1 oder 2, **dadurch gekennzeichnet, daß** die Erwärmung über die volle Breite des Einlagenmaterials erfolgt.

4. Verfahren nach einem der Ansprüche 1 bis 3, **dadurch gekennzeichnet, daß** das Einlagenmaterial über die ersten und letzten zwei bis sechs Fäden (8) erfolgt.

5. Verfahren nach Anspruch 4, **dadurch gekennzeichnet, daß** das Einlagenmaterial über die ersten und letzten vier Fäden (8) erwärmt wird.

6. Verfahren nach einem der Ansprüche 2 oder 3, wobei die einzelnen Lagen in endlosen Bahnen der Trommel (10) über eine Zuführeinrichtung (12) zugeführt und vor dem Wickeln um die Trommel (8) auf die passende Länge von einer Schneidvorrichtung (13) geschnitten werden, **dadurch gekennzeichnet, daß** das Einlagenmaterial vor dem Schneiden unmittelbar an der späteren Schnittstelle so erwärmt wird, daß beidseitig der Schnittstelle dieselbe Anzahl Fäden (8) erwärmt wird.

7. Verfahren nach einem der Ansprüche 1 bis 6, **dadurch gekennzeichnet, daß** die Erwärmdauer festgelegt ist.

8. Verfahren nach Anspruch 7, **dadurch gekennzeichnet, daß** nach dem Erwärmen das Einlagenmaterial wieder abgekühlt wird.

9. Verfahren nach Anspruch 8, **dadurch gekennzeichnet, daß** das Abkühlen vor dem Schneiden erfolgt.

10. Vorrichtung zur Erwärmung des Einlagenmaterial zur Verwendung in dem Verfahren nach einem der Ansprüche 6 bis 9, wobei die Zuführeinrichtung (12) mit einer wenigstens ein Schneidmesser aufweisenden Schneideinrichtung (13) versehen ist, **dadurch gekennzeichnet, daß** unterhalb der Schneideinrichtung (13) mindestens ein zumindest über Teilbereiche der Bahnbreite des Einlagenmaterials reichender, an das Einlagenmaterial heranbringbarer Wärmestrahler (14) so angeordnet ist, daß er beidseitig zum Schneidmesser einen eindeutig begrenzten und identischen Längenbereich des Einlagenmaterials erwärmt.

11. Vorrichtung nach Anspruch 10, **dadurch gekennzeichnet, daß** der Wärmestrahler (14) über die volle Bahnbreite des Einlagenmaterials reicht.

12. Vorrichtung nach Anspruch 10, **dadurch gekennzeichnet, daß** der Wärmestrahler (14) ein Infrarotstrahler ist und zwischen dem Strahler (14) und dem Einlagenmaterial ein geschlitztes Blech (16) angeordnet ist, und die Länge des Schlitzes (17) mindestens der Bahnbreite des Einlagenmaterials und seine Breite der Länge des zu erwärmenden Bereichs entspricht.

13. Vorrichtung nach einem der Ansprüche 10 bis 12, **dadurch gekennzeichnet, daß** eine zumindest über Teilbereiche der Bahnbreite reichende Kühlvorrichtung (15) vorgesehen ist, die parallel beabstandete, auf die Materialbahn gerichtete Luftdüsen (19) aufweist und mit Kaltluft betreibbar ist.

14. Vorrichtung nach Anspruch 13, **dadurch gekennzeichnet, daß** die Kühlvorrichtung (15) über die volle Bahnbreite der Materialbahn reicht.

## Claims

1. Method of producing a carcase (1), which is constructed from a plurality of plies, for a tyre, more especially a vehicle tyre, by winding the plies around a drum (10), said method having the following steps:
a) forming the inner core (2) from an airtight rubber layer,
b) depositing the insert ply (3) on the inner core (2), the insert ply material being formed from prestretched insert ply filaments which are embedded in rubber and are formed from plastics material, which filaments were prestretched by the influence of temperature prior to the embedding process, and the beginning and the end of the deposited insert ply (3) overlapping each other,
c) placing the bead cores (6),
d) wrapping the lateral edges of the insert ply (3) around the bead cores (6), and
e) depositing lateral strips (7) or the like and wrapping such around the bead cores (6),
**characterised in that** the insert ply material is heated in the initial and end regions in the region of the overlap in order to restore the elongation of the prestretched filaments (8) in the overlap region.

2. Method according to claim 1, **characterised in that**, prior to the insert ply (3) being deposited, the insert ply material is heated in the region of the subsequent overlap.

3. Method according to claim 1 or 2, **characterised in that** the heating is effected over the full width of the insert ply material.

4. Method according to one of claims 1 to 3, **characterised in that** the insert ply material is heated over the first and last two to six filaments (8).

5. Method according to claim 4, **characterised in that** the insert ply material is heated over the first and last four filaments (8).

6. Method according to one of claims 2 or 3, wherein the individual plies are supplied in endless webs to the drum (10) via a feeding device (12) and, prior to being wound around the drum (10), said plies are cut by a cutting device (13) to the appropriate length, **characterised in that**, prior to the cutting process, the insert ply material is heated directly at the subsequent interface so that the same number of filaments (8) is heated on both sides of the interface.

7. Method according to one of claims 1 to 6, **characterised in that** the heating period is fixed.

8. Method according to claim 7, **characterised in that**, after the heating process, the insert ply material is cooled-down again.

9. Method according to claim 8, **characterised in that** the cooling-down process is effected prior to the cutting process.

10. Apparatus for heating the insert ply material for use in the method according to one of claims 6 to 9, wherein the feeding device (12) is provided with a cutting device (13), which has at least one cutting blade, **characterised in that** at least one heat radiator (14), which extends at least over partial regions of the web width of the insert ply material and can be attached to the insert ply material, is so disposed that it heats a clearly defined and identical longitudinal region of the insert ply material on both sides relative to the cutting blade.

11. Apparatus according to claim 10, **characterised in that** the heat radiator (14) extends over the full web width of the insert ply material.

12. Apparatus according to claim 10, **characterised in that** the heat radiator (14) is an infrared radiator, and a slotted sheet metal plate (16) is disposed between the radiator (14) and the insert ply material, and the length of the slot (17) corresponds to at least the web width of the insert ply material, and its width corresponds to the length of the region to be heated.

13. Apparatus according to one of claims 10 to 12, **characterised in that** a cooling device (15) is provided, which extends at least over partial regions of the web width, said device having air nozzles (19), which are spaced apart from one another, lie parallel to one another and are directed towards the material web, and said device being operable with cold air.

14. Apparatus according to claim 13, **characterised in that** the cooling device (15) extends over the full web width of the material web.

## Revendications

1. Procédé de fabrication d'une carcasse (1) d'un pneumatique, constituée de plusieurs couches, procédé de fabrication, en particulier, d'un pneumatique de véhicule, effectué par enroulement des couches autour d'un tambour (10), comprenant les étapes suivantes consistant :
a) à former l'âme intérieure (2) d'une couche de caoutchouc étanche à l'air,
b) à appliquer l'armature (3) sur l'âme intérieure (2), où le matériau de l'armature se compose de fils d'armature préétirés en matière plastique, enrobés dans le caoutchouc, lesquels fils d'armature ont été préétirés sous l'effet de la température, avant l'enrobage, le début et la fin de l'armature (3) appliquée se chevauchant,
c) à placer les tringles (6),
d) à rabattre les bords latéraux de l'armature (3) autour des tringles (6), et
e) à procéder à l'application de bandes latérales (7) ou d'éléments analogues et à rabattre autour des tringles (6),
**caractérisé en ce que** le matériau de l'armature est chauffé dans la zone du chevauchement, dans la zone du début et de la fin de l'armature, pour réduire, dans la zone de chevauchement, l'allongement des fils (8) préétirés.

2. Procédé selon la revendication 1, **caractérisé en ce que** le chauffage du matériau de l'armature est effectué dans la zone du chevauchement ultérieur, avant l'application de l'armature (3).

3. Procédé selon la revendication 1 ou 2, **caractérisé en ce que** le chauffage a lieu sur toute la largeur du matériau de l'armature.

4. Procédé selon l'une quelconque des revendications 1 à 3, **caractérisé en ce que** le matériau de l'armature est chauffé sur deux à six des premiers et derniers fils (8).

5. Procédé selon la revendication 4, **caractérisé en ce que** le matériau de l'armature est chauffé sur quatre des premiers et derniers fils (8).

6. Procédé selon la revendication 2 ou 3, où les différentes couches sont fournies au tambour (10), en bandes sans fin, via un dispositif d'alimentation (12), et sont coupées à la longueur appropriée par un dispositif de coupe (13) avant l'enroulement autour du tambour (10),
**caractérisé en ce que** le matériau de l'armature est chauffé, au niveau du point de coupe ultérieur, immédiatement avant la coupe, de manière telle que le même nombre de fils (8) est chauffé des deux côtés du point de coupe,

7. Procédé selon l'une quelconque des revendications 1 à 6, **caractérisé en ce que** la durée de chauffage est fixée.

8. Procédé selon la revendication 7, **caractérisé en ce que** le matériau de l'armature est à nouveau refroidi après le processus de chauffage.

9. Procédé selon la revendication 8, **caractérisé en ce que** le refroidissement a lieu avant le processus de coupe.

10. Dispositif de chauffage du matériau de l'armature pour l'utilisation dans le procédé selon l'une quelconque des revendications 6 à 9, où le dispositif d'alimentation (12) est doté d'un dispositif de coupe (13) comprenant au moins une lame de coupe, **caractérisé en ce que**, au-dessous du dispositif de coupe (13), est disposé au moins un radiateur thermique (14) pouvant être rapproché du matériau de l'armature et ayant un rayon d'action au moins sur des zones partielles de la largeur de bande du matériau de l'armature, de façon telle que le radiateur thermique chauffe, des deux côtés par rapport à la lame de coupe, une zone longitudinale du matériau de l'armature, nettement délimitée et identique.

11. Dispositif selon la revendication 10, **caractérisé en ce que** le radiateur thermique (14) a un rayon d'action sur toute la largeur de bande du matériau de l'armature.

12. Dispositif selon la revendication 10, **caractérisé en ce que** le radiateur thermique (14) est un radiateur à infrarouge, une tôle (16) à fente étant disposée entre le radiateur (14) et le matériau de l'armature, la longueur de la fente (17) correspondant au moins à la largeur de bande du matériau de l'armature, la largeur de cette fente correspondant à la longueur de la zone à chauffer.

13. Dispositif selon l'une quelconque des revendications 10 à 12, **caractérisé en ce qu'**il est prévu un dispositif de refroidissement (15) ayant un rayon d'action au moins sur des zones partielles de la largeur de bande, lequel dispositif de refroidissement comprend des buses d'air (19) dirigées sur la bande de matériau et espacées de façon parallèle, ledit dispositif de refroidissement pouvant fonctionner avec de l'air froid.

14. Dispositif selon la revendication 13, **caractérisé en ce que** le dispositif de refroidissement (15) a un rayon d'action sur toute la largeur de la bande du matériau.
